# EUROPEAN PATENT SPECIFICATION

(11) **EP 3 671 377 B1**
(45) Date of publication and mention of the grant of the patent: **30.08.2023**
(21) Application number: 19216958.9
(22) Date of filing: 17.12.2019
(51) Int. Cl.: G05B 15/02

(54) **DEVICE TO BE MOUNTED ON A COVERING INSTALLATION**
AN EINE ABDECKUNGSINSTALLATION ZU BEFESTIGENDE VORRICHTUNG
DISPOSITIF À MONTER SUR UNE INSTALLATION DE REVÊTEMENT

(30) Priority: 20.12.2018 IT 201800020503
(43) Date of publication of application: 24.06.2020
(73) Proprietor: Teleco Automation S.R.L., 31100 Treviso (IT)
(72) Inventor: BORSOI, Luigi, 31012 Capella Maggiore (TV) (IT); COLLOVINI, Roberto, 31100 Treviso (IT)
(74) Representative: Piovesana, Paolo

(56) References cited:
- EP-A1- 3 450 672
- EP-A2- 2 395 176
- US-A1- 2012 031 571
- US-A1- 2014 000 819
- US-A1- 2017 191 273

## Description

The present invention relates to a device to be mounted on a roll-up roof installation, in particular on a roller blind, preferably but not necessarily motorized.

Rolling curtains of the type comprising a sheet are known which, in the condition of a retracted curtain, is wound on a tubular shaft and in the unfolded curtain condition is unwound from said shaft and is kept extended by its constraint with one side to said tubular shaft and with the opposite side to a rigid crosspiece that can be approached and moved away from the tubular shaft itself.

In the case of protruding curtains, the rigid cross-piece is connected to the support structure of the tubular shaft by means of a pair of articulated arms, while in the case of a sliding curtain the rigid cross-piece is made to slide with ends along two fixed parallel guides placed on the sides of the surface that must be able to be covered by the unfolded tent.

In the case of protruding curtains it is also provided that the rigid crosspiece may have a conformation such as to cover the awning, when it is wrapped around the tubular shaft, and in this way to constitute a sort of protective box thereof, which in this case is called a boxed tent.

Independently of the type of curtain, its motorization which leads to the winding of the cloth on the tubular shaft and its unwinding from the tubular shaft is obtained with a traditional electric tubular motor inserted inside the winding shaft and can be controlled, preferably by radio, directly by the user or by light and/or wind sensors. This solution is for example described in the winding covers described in AU 2014 200269, US2015/362896 and US2017/101820.

The current market requirement is to equip the blinds with lights that can be used to illuminate the surface below the curtain and/or to create courtesy lights and/or to create lighting effects, in particular RGB effects.

Until now this requirement is satisfied in the articulated arm awnings by applying these lights, preferably led lights, to the arms themselves and/or to the rigid crosspiece and/or to the support structure of the curtain, and in the sliding curtains by applying these lights to the guides and/or to the supporting pillars of the guides and/or to the other parts of the tent supporting structure.

However, all this entails the need to create a lighting system with dedicated components which, together with the lights themselves, must be able to be applied to the tent support structure. In particular, a light supply and control unit must be provided, which in the known solutions is external or inserted in one of the supporting pillars of the curtain, if provided. However, these are solutions of a certain complexity of installation, certainly unsatisfactory in particular in the case of curtains with articulated arms and therefore without uprights.

Tubular motors have also been proposed provided with an output for powering the lights and therefore motors in which the light supply unit is integrated in the motor itself. This is a solution that, in practice, has at least partially eliminated the difficulty of installing the lighting system but has highlighted some limitations, given that the lights are powered at low voltage (12 or 24V DC) and the power that can be supplied by the lights output of the engine can only power a small amount/number of lights.

Furthermore, the current market requirement is to provide an audio system, in particular for music reproduction, in correspondence with the roller blinds or the roof installation.

Currently, this requirement is satisfied with dedicated audio systems which are completely independent and separate, both as a power supply and as a control, from a cover installation at which one wants to have a reproduction and musical diffusion, or of another audio signal in general.

US2018/0355662 describes a solution in which an acoustic alarm system is connected to a curtain. In particular, this solution provides that the processor integrated in the curtain generates a signal such that the wireless antenna then transmits an activation command to a speaker connected via wireless; the speaker will then play an audible alarm until it is turned off.

The object of the invention is to propose a device which contributes to integrating the audio reproduction functionality, preferably of musical reproduction, on a rolling cover installation that is alternative or improved with respect to the known solutions.

Another object of the invention is to propose a device which also allows the control of lighting elements mounted on the roll-up roof installation.

Another object of the invention is to propose a device that is simple to install, even by unskilled personnel.

Another object of the invention is to propose a device that is easy to program and manage.

Another object of the invention is to propose a device that is independent, autonomous and/or additional with respect to the motorization unit of the roll cover installation.

Another object of the invention is to propose a device that can also be used in combination with photovoltaic panels.

Another object of the invention is to propose a device that can be remotely controlled even from a mobile phone both to control the actuation of the device itself and to verify the correct execution of the received commands.

Another object of the invention is to propose a device which is both improved and/or alternative to the traditional ones.

Another object of the invention is to propose a device that can be obtained in a simple, rapid manner and with low costs.

Another object of the invention is to propose a roll-up roof installation, in particular a roll-up curtain, which is provided with a device which is simple to install, easy to program and manage, which can be obtained simply, quickly and with low costs.

All of these objects, considered individually or in any combination thereof, and others which will be apparent from the description which follows are achieved, according to the invention, with a device to be mounted on a roll-up roof installation as defined in claim 1, as well as by an installation of roll-up covering according to claim 9.

The present invention is further clarified hereinafter in some of its preferred embodiments given for purely exemplifying and non-limiting purposes with reference to the attached table of drawings, in which:

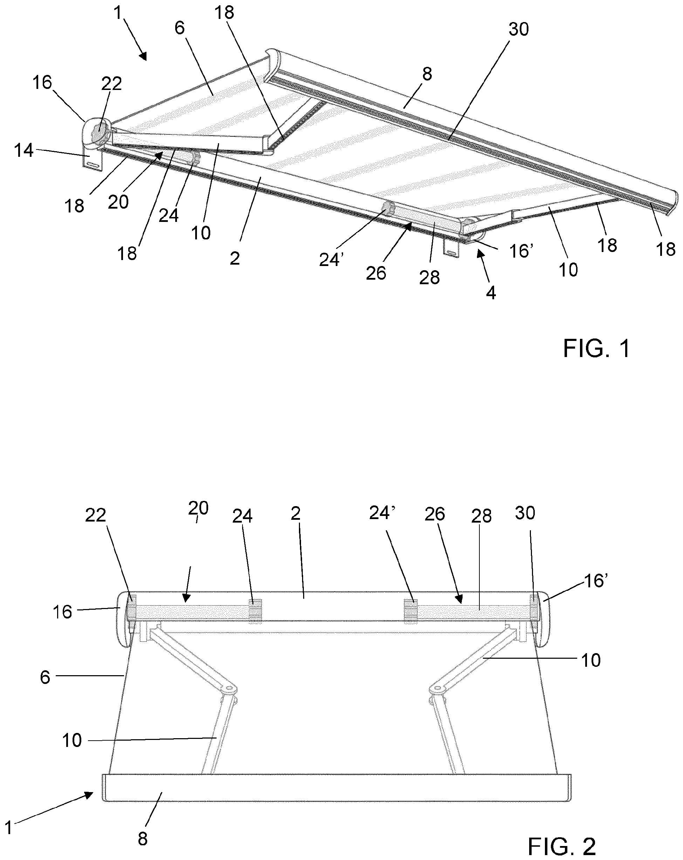

- Figure 1: shows a perspective view from below of a motorized roll tent provided with a device according to the invention,
- Figure 2: shows it in a perspective view from above and partly in transparency,

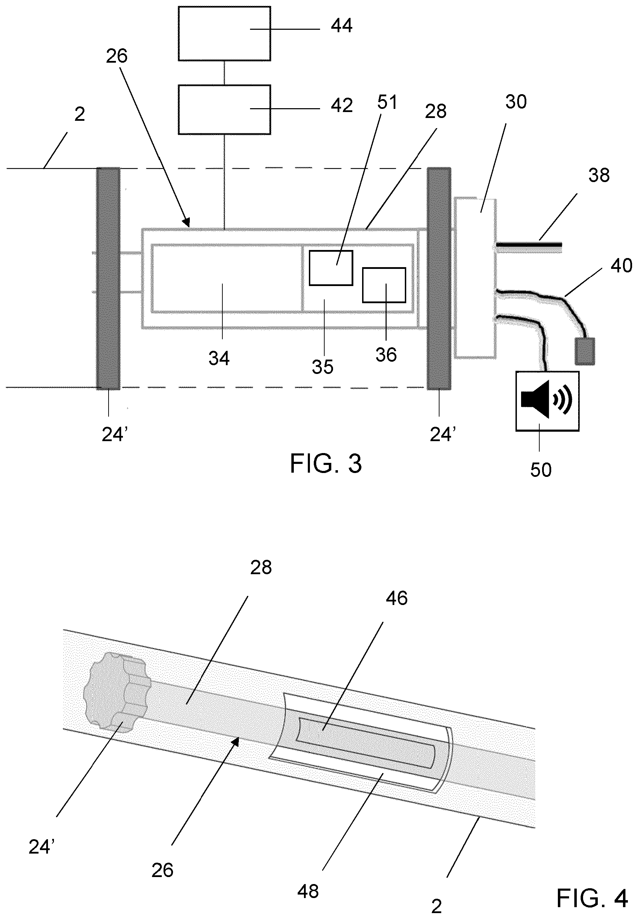

- Figure 3: shows it in a schematic longitudinal section, and
- Figure 4: shows a schematic perspective view a detail of the device according to the invention inserted inside the tubular shaft of the tent.

As can be seen from the figures, the device according to the invention, generally designated by the reference numeral 26, is applied/mounted, in the illustrated example, to a roll-up roof installation, in particular a roller blind, generally indicated with the number of reference 1.

Preferably, the roller blind 1 is of the traditional type. Preferably, the roller blind 1 is motorized but could also be moved manually. In particular, the roller blind 1 is of the type with articulated arms, i.e. it is of the type that comprises a tubular shaft 2, a support structure 4 of the tubular shaft 2, a sheet 6, which can be wound around the tubular shaft 2 and carried out by this, a rigid crosspiece 8, to which the edge of the sheet 6 opposite to that constrained to the tubular shaft 2 is applied, and two pair of articulated arms 10, which connect the rigid crosspiece 8 to the support structure 4 and guide it in his translational movements with respect to the arms 10.

Conveniently, the winding/unwinding of the sheet 6 can take place both along a substantially vertical direction, and along a more or less inclined direction with respect to the vertical.

The tubular shaft 2 can be for example a metal shaft which, suitably, can have any cross-section. Preferably, the tubular shaft 2 can have a circular or polygonal section, for example hexagonal, octagonal or similar. Conveniently, the tubular shaft 2 is of the type traditionally usable for curtains and/or for rolling shutters.

Preferably, the support structure 4 can comprise:
- a rigid metal band, which appropriately adheres to a fixed structure, for example to the wall of a building,
- a first pair of brackets 14 for fixing the rigid band to the fixed structure, and
- a second pair of brackets 16, 16', preferably shaped like wings, which extend from said rigid band towards the outside and which suitably support at the ends the tubular shaft 2 which is advantageously provided with all the necessary components for its proper functioning, as will be described further below.

Suitably, the sheet 6 can be of any traditional type and does not require further explanation.

Conveniently, the rigid crosspiece 8 can be constituted by a piece of metal or plastic profiled section and can have any section. Preferably, the rigid crosspiece 8 is shaped so that when the tent is in a wound condition, it adheres to the support structure 4 and forms with it a sort of container or box, which houses inside it the tubular shaft 2, the sheet 6 wound on it and the articulated arms 10, which are in the folded condition.

Advantageously, at least one acoustic diffuser 50 (i.e. an electro-acoustic transducer which transforms the electrical signal of an audio/sound amplifier into sound) is associated with the roller blind 1. Conveniently, the acoustic diffuser 50 comprises at least one loudspeaker for reproducing different frequencies, preferably for the linear and precise reproduction of the whole audible frequency spectrum.

Preferably, the acoustic diffuser 50 can be fixed and mounted directly on a rigid element of the roller blind 1, or it can be mounted on a further dedicated component which then in turn is associated with a component of the roller blind 1 or, again, can be mounted on the external fixed structure. Preferably, the acoustic diffuser 50 can be housed inside the tubular shaft 2 which, for this purpose, is provided with corresponding openings for sound diffusion.

Advantageously, as described in more detail below, the acoustic diffuser 50 is connected - preferably by means of conductive wires for electrical connection - to the device 26 housed in the tubular shaft 2 at one end of said shaft which is opposite to the one in which the drive unit is inserted/housed or the means for actuation and manual actuation for the rotation of the shaft itself (as described in more detail below). Preferably, when the acoustic diffuser 50 is mounted on the roller blind 1, the conductive cables for electrical connection run, at least in part, inside the components of the curtain itself and, therefore, are hidden from view from the outside.

Advantageously, lighting elements 18 can be mounted on the roller blind 1. Advantageously, the lighting elements 18 can be mounted on any component of the roller blind 1 and in any position thereof. More particularly, the lighting elements 18 can be mounted on the support structure 4 and/or on the articulated arms 10 and/or on the rigid crosspiece 8 and/or on the tubular shaft 2 and/or also on the sheet 6. Preferably, the lighting elements 18 are to be mounted on the rigid elements of the roller blind 1, such as the support structure 4 and/or the articulated arms 10 and/or the tubular shaft 2 and/or the rigid crosspiece 8

Advantageously, as described in more detail in detail subsequently, the lighting elements 18 are connected - preferably by means of cables/wires connecting to an electrical connection - to the device 26 housed in the tubular shaft 2. Preferably, the electrically connecting conductor cables run inside the components of the roller blind 1 and, therefore, they are hidden from view from the outside.

Advantageously, the lighting elements 18 are light sources and, preferably, are strips of LEDs that define monochromatic and/or RGB light sources.

In particular, the lighting elements 18 consist of at least one strip of LEDs which comprises a set of LED diodes, i.e. electronic components which emit light when supplied with electricity. Conveniently, the LED diodes are fixed - preferably by welding - on a printed circuit (PCB), preferably flexible, which performs the function of support and electrical connection. Advantageously, the LED diodes of the LED strip can be configured to emit monochromatic light or can be of the RGB type.

Advantageously, in the example shown in the figures, at the lower edge of the support structure 4, at the lower edge of the articulated arms 10 and at the lower edge of the rigid crosspiece 8 are applied strips of led 18 which globally form diffuse sources of monochromatic light or light RGB and are connected to the device 26 housed in the tubular shaft 2 by means of electrical connection as conductor cables running inside the rigid crosspiece 8 and the articulated arms 10, and/or the other rigid components of the roller blind 1.

Suitably, the roller blind 1 comprises means configured to cause rotation in the two directions of the tubular shaft 2, thus allowing to cover and unwind the covering sheet 6 having a flap fixed to said shaft.

Advantageously, a drive unit is inserted in the tubular shaft 2 to cause the shaft to rotate in both directions. Preferably, this drive unit is inserted inside the tubular shaft 2 at a first end thereof. Preferably, the unit comprises a traditional tubular drive electric motor 20, preferably of the single-phase asynchronous type, inserted within the tubular shaft itself. Preferably, said unit also comprises means for the power supply of said electric motor and a control unit for controlling said motor.

More specifically, suitably, the motor 20 is provided with a motor head 22 which is suitably fixed with any known system to the support structure 4, preferably it is fixed to the wing bracket 16 of the latter. The tubular motor 20 is also provided with an output pinion to which an adapter 24 (pulley) for towing the tubular shaft 2 is coupled, cooperating in a traditional manner with a similar unattached adapter 24", which is mounted in the vicinity of said head 22.

Alternatively, means can be provided - which can be manually operated and actuated - configured to cause rotation in both directions of the tubular shaft 2. Suitably, these means are configured to cause rotation in the two directions of the tubular shaft 2 can be constituted by a traditional winch that can be operated manually or with an electric motor applied thereto.

The device 26 is also inserted inside the tubular shaft 2. Preferably, this device 26 is inserted at the other end of the tubular shaft 2.

Preferably, at one end of the tubular shaft 2 the drive unit of the shaft itself is inserted and housed while at the other end of the tubular shaft 2 the device 26 is inserted and housed.

Therefore, appropriately, the device 26 is substantially independent and autonomous - both from a constructive point of view and positioning both from an operational operating point of view - with respect to the motorization unit of the roll-up roof installation.

The device 26 comprises a casing 28, preferably tubular, which is removably inserted inside the tubular shaft 2.

The device 26 comprises:
- means 30 for fixing the casing 28 to said external support structure 4, and
- means 24' which are interposed between said casing 28 and the tubular shaft 2 and which are configured to allow the casing 28 to support said tubular shaft 2 in an idle manner, i.e. so as to decouple the rotation of the tubular shaft 2 from the casing 28, thus allowing said tubular shaft 2 to rotate about its longitudinal development axis while the casing 28 remains fixed/stationary.

Conveniently, the means for fixing the casing 28 to said external support structure 4 comprise a head 30 which is applied to the casing 28 so as to fix it to the external support structure 4. In particular, the head 30 makes the casing 28 to the external support structure 4, thus supporting the tubular shaft 2 at one of its ends.

Preferably, the fixing head 30 that allows fixing to the other wing bracket 16' of the support structure 4, is appropriately applied to the casing 28 (in particular on its outer side) and a pair of adapters 24'.

Advantageously, said means which are interposed between said casing 28 and the tubular shaft 2 comprise at least one adapter 24' which is interposed between the casing 28 and the tubular shaft 2 and which is configured to rotate with said tubular shaft 2 and to allow the casing 28 to idly support the tubular shaft 2. Advantageously, between the casing 28 and the tubular shaft 2 there are interposed the adapters 24' supporting the casing 28 inside the same shaft. Preferably, a pair of support adapters 24' is provided, interposed between the opposite sides of the casing 28 and the tubular shaft 2.

Preferably, both the head 30 and the adapters 24' have a shape similar to that of the head 22 and of the adapters 24 of the tubular motor 20, but unlike those having the sole function of idle support of the tubular shaft 2 at its opposite end to that for inserting said motor 20.

Suitably, it is understood that the shape and dimensions of the casing 28 are not connected to those of the tubular shaft 2 although obviously they must be compatible with those. In particular, the casing 28 has a shape and dimensions suitable for allowing its insertion and housing inside the tubular shaft 2. Suitably, the stability of the positioning of the casing 28 inside the tubular shaft 2 is obtained by means of the adapters 24'.

The device 26 according to the invention comprises:
- at least one amplifier 51 intended to be connected with the acoustic diffuser 50 and configured to amplify the audio signals received at the input and for outputting the audio signals thus amplified to said at least one acoustic diffuser 50,
- at least one receiver 36 which is connected to said amplifier 51 and that is configured to receive from the outside the audio signals to be amplified by means of said at least one amplifier 51,
- a unit for the control and command 35 of the reproduction of the audio signals received from the outside by said receiver 36,
- a power supply 34 for supplying electrical energy to said control and command unit 35, to said receiver 36 and to said amplifier 51.

Advantageously, the receiver 36 is connected or incorporated in said control unit 35. Advantageously, the amplifier 51 it is connected or incorporated in said control unit 35. Advantageously, the control unit 35 comprises a processor. Preferably, the control unit 35 comprises a microcontroller.

Advantageously, the control unit 35 is connected with an output interface 40 provided outside the tubular body 28 and in turn connected to the lighting elements 18. Conveniently, the connection between the control unit 35 (housed in the the interior of the casing 28, and therefore inside the tubular shaft 2) and the output interface 40 (positioned outside the tubular shaft 2), as well as between the latter and the lighting elements 18 is obtained by means of conductor cables for connection and transmission of electrical signals. Preferably, the command/communication drivers with the output interface 40 connected to the lighting elements 18 are implemented in the control unit 35.

Suitably, the amplifier 51 is of the traditional type and is configured to amplify the audio signals received in input and thus supply in output amplified audio signals to be sent to the acoustic diffuser 50 mounted outside the casing 28 and the tubular shaft 2. Advantageously, the amplifier 51 comprises suitable electronic components for the amplification of audio signals. Conveniently, the amplifier 51 is configured and intended to amplify only the audio signals to be sent to an acoustic diffuser 50 for the corresponding sound reproduction, and in particular it is not provided for amplifying command and/or control signals. Preferably, the amplifier 51 comprises an electronic circuit configured for the amplification of the audio signals at the input and, suitably, this amplifier is connected or incorporated in the control unit 35.

Advantageously, inside the casing 28 is housed the power supply 34 for the lighting elements 18 and for the control unit 35.

Advantageously, the amplifier 51 provided inside the casing 28 is connected with the acoustic diffuser 50 provided outside the casing 28 and of the tubular shaft. Conveniently, the connection between the amplifier 51 (housed inside the casing 28, and therefore inside the tubular shaft 2) and the acoustic diffuser 50 (positioned outside the tubular shaft 2) is obtained by means of conductor cables for the connection and transmission of audio signals.

Preferably, inside the casing 28 there is also provided the receiver 36 which is connected, via wireless (for example via Bluetooth or Wi-Fi) and/or via wire, with at least one source apparatus provided outside of said roller blind 1 so as to receive, from said external source apparatus, the audio signals to be amplified by the amplifier 51 and then send them to the acoustic diffuser 50 to convert them into sounds.

Advantageously, the receiver 36 is of the wireless type, preferably radio. Preferably, the receiver 36 is a Bluetooth receiver.

Preferably, an antenna is connected to the receiver 36 to enhance the signal sent wirelessly from the external source device.

Advantageously, the receiver 36 is also configured to receive transmitted audio signals from radio stations (both in FM and in AM, as well as in digital format).

Advantageously, the receiver 36 can be configured to receive via audio the audio signals to be amplified, preferably by means of a USB interface or other known interfaces suitable for the transmission of audio signals.

Advantageously, the receiver 36 can be configured to receive the audio signals to be amplified wirelessly, preferably by radio (for example by means of the Bluetooth standard), and also to receive said audio signals via wire (for example by means of a USB interface).

Conveniently, by means of the receiver 36 the control unit 35 can receive audio signals from an external source apparatus which acts as a transmitter, and in particular from a remote control or even from a cellular telephone (preferably a smartphone) or tablet, or from other traditional wireless devices in general. Conveniently, for this purpose, the receiver 36 is connected and/or incorporated to the electronic circuit of the control unit 35 to be operatively connected to the amplifier 51 connected to the diffuser 50.

Preferably, inside the casing 28 is also provided the receiver 36 which is connected, via wireless (for example via Bluetooth or Wi-Fi) and/or by wire, with the outside of said roller blind 1 to receive from the outside also the control signals to control, based on these, the lighting elements 18.

Conveniently, by means of the receiver 36 the control unit 35 can receive from an external transmitter, and in particular from a remote control or even from a cellular phone, preferably a smartphone, or from other traditional wireless devices in general, control signals for the lighting elements 18. Conveniently, for this purpose, the receiver 36 is connected and/or incorporated to the electronic circuit of the control unit 35 for be operatively connected with the control/communication drivers of the output interface 40 connected to the lighting elements 18.

Advantageously, the receiver 36 can also be connected via radio to light, wind, rain and/or snow sensors.

Conveniently, therefore, the device 26 comprises at least one receiver 36 - preferably a single receiver - configured to receive from the outside both the audio signals to be amplified by means of said at least one amplifier 51, and the control signals to control the switching on and off. and the adjustment of the lighting elements 18 and/or of the sound reproduction to be carried out by the acoustic diffuser 50. However, only the audio signals thus received are sent to the amplifier 51, while the received command signals are not sent to the amplifier 51 and - in particular - they are not amplified in any way.

The receiver 36 can advantageously be replaced by a transceiver, preferably radio, which in addition to sending the audio signals to the amplifier 51 or corresponding control signals to the lighting elements 18 and/or to the amplifier 51 and/or to the acoustic diffuser 50, it can remotely communicate the status of the elements themselves and, preferably, also the operating parameters or the possible presence of anomalies or malfunctions. In particular, for this purpose, the transceiver, in addition to controlling and communicating - with its receiver side - with the amplifier 51, connected with the acoustic diffuser 50, and with the output interface 40 connected to the lighting elements 18, can transmit with the transmitter side signals on the state of the acoustic diffuser 50 and/or of the lighting elements 18 themselves. Basically, appropriately, in this way the user can remotely control, for example by means of a mobile phone (preferably by smartphone) or a tablet, the switching on, switching off and adjustment of the sound reproduction and/or of the lighting elements 18 and can receive, again with the mobile phone (preferably a smartphone), information on the current status of these. Conveniently, the transceiver is connected and/or incorporated to the electronic circuit of the control unit 35 to be operatively connected to the amplifier 51 and/or to the control/communication drivers of the output interface 40 connected to the lighting elements 18.

Advantageously, the receiver 36 - in its transceiver version - can be configured to receive audio signals to be amplified and also for retransmitting by radio said audio signals, once they have been amplified by said at least one amplifier 51, to other installations or units for the audio reproduction which are arranged to receive said signals and which are positioned, within an appropriate radius of coverage, at a greater distance.

Advantageously, in the case of an external portable device such as a smartphone or tablet, a software module - which preferably consists of a native mobile software application, also known as APP - configured to connect wirelessly with the receiver 36 for the management and setting of the connections of the control unit 35 with the external control devices, as well as for controlling the switching on, switching off and adjustment of the sound reproduction by means of the diffuser 50 and/or the lighting elements 18.

Advantageously, according to a further embodiment, the receiver 36 can be connected to a centralized or distributed home automation unit which is configured to receive information from the receiver 36, and send it, preferably via Wi-Fi and through Internet protocols, to the external portable apparatus and/or to a cloud archive accessible from the external portable device, so as to feeling the remote control of the device 26, in addition to monitoring its operation. Conveniently, the connection between the receiver 36 and the home automation unit can take place via cable or wireless, in particular by radio waves (for example Wi-Fi or according to the Bluetooth protocol).

Advantageously, the power supply 34 housed in the casing 28 can be supplied from the outside, preferably it is fed directly through a cable 38 connected to an external electric source (preferably to the mains) and therefore in practice without any limitation on the power that can be delivered and therefore on the quantity/number of lighting elements 18 can be supplied.

It is also envisaged that, alternatively, the power supply 34 housed in the casing 28 may be powered by one or more batteries 42 which, preferably, may be recharged with one or more external photovoltaic panels 44 which, suitably, may be mounted on the cover installation 1 and/or may be external and independent from the latter.

The rechargeable battery 42 can advantageously be housed inside the casing 28.

Advantageously, on the side wall of the casing 28 it is provided a first door 46 for accessing to the inside of the casing itself from the outside, for example to be able to access to the rechargeable battery 42 - if provided. Advantageously, a second door 48 may also be provided in the tubular shaft 2 to access the first door 46 formed in the casing 28. Conveniently, it is understood that the first door 46 of the casing 28 and the the second door 48 of the tubular shaft 2 faces each other. Obviously, in the example illustrated in the figures, this accessibility requires that the device 26 is correctly inserted into the tubular shaft 2 and that the curtain is unfolded, i.e. that the sheet 6 is unwound from the tubular shaft 2 and does not cover the second door 48.

Advantageously, the same rechargeable battery 42 can also supply the motor 20, preferably through an inverter, also housed inside the casing 28. Suitably, in this case, the entire curtain 1 can also be installed in place where power supply is not available. Advantageously, it is in any case provided that the motor 20 can be supplied through an external low voltage supply, again by means of an inverter.

From the aforegoing it is apparent that the device according to the invention is advantageous and in particular:
- enables the amplification section of an audio reproduction system to be integrated in an efficient and space-saving way in the roof installation,
- thanks to its integration in the casing 28 makes its installation simple and rapid, since it requires only the insertion of the casing 28 inside the tubular shaft 2, the constraint of the shaft thus equipped to the support structure 4 and the connection of the device 26 to the acoustic diffuser and/or to the lighting sources and, if provided, to the external mains supply,
- It defines an element of mechanical connection between the tubular shaft 2 and the fixed support structure 4,
- it practically does not imply any limitation in the electric power that can be supplied and therefore it is able to feed and also control a large number of loudspeakers and/or lighting elements,
- if it uses photovoltaic panels 44 it makes the device and more generally the entire tent independent from the external electric network,
- it allows the rechargeable battery 42 to be housed inside the casing 28, further simplifying the installation of the device and eliminating in particular the external fixed batteries.

The device according to the present invention has been described herein in particular with reference to its application in a roller blind 1, however it is intended that it can be applied in any installation of roll-up cover, both vertical and inclined, such as for example shutters, shutters or also a sectional door.

In particular, unlike the solution envisaged in US2018/355662, in the device according to the present invention the amplifier is an amplifier of audio signals and, in particular, amplifies the audio signals which are received from the outside through the receiver of which the device itself is provided. On the contrary, in US2018/355662 no audio signal amplifier is provided since at most the activation signal/command to be sent to the acoustic speaker is amplified; moreover, US2018/355662 does not provide for the audio signals to be amplified to be received by the receiver provided in the device. Not least is the fact that in US2018/355662 no receiver is provided which is housed inside the same casing as the processor defining the unit of control and command.

## Claims

1. Device (26) to be mounted on a roll-up cover installation (1), said roll-up cover installation (1) being of the type comprising:
- a support structure (4) for the constraint of said cover installation (1) to a fixed external structure,
- a tubular shaft (2) supported by said structure (4),
- means configured to cause the rotation of said tubular shaft (2),
- a sheet (6) to be wound on said tubular shaft (2) and to be unwound from this,
**characterized in that** the device (26) comprises a casing (28) which is configured to be removably inserted and housed in said tubular shaft (2) at an opposite end compared to that in which are housed said means configured for causing the rotation of said tubular shaft (2), the device (26) further comprising the following components that are arranged and accommodated inside said casing (28):
- at least one amplifier (51) intended to be connected with at least one acoustic diffuser (50) and configured to amplify the audio signals received at the input and for outputting the audio signals thus amplified to said at least one acoustic diffuser (50),
- at least one receiver or transceiver (36) which is connected to said amplifier (51) and which is configured to receive from the outside the audio signals to be amplified by means of said at least one amplifier (51).
- a unit for the control and command (35) of the reproduction of the audio signals received by said receiver or transceiver (36), said amplifier (51) and said receiver/transceiver (36) being connected and/or incorporated in said control and command unit (35),
- at least one power supply (34) for supplying electrical energy to said control and command unit (35), to said receiver/transceiver (36) and to said amplifier (51)
said device (26) further comprising:
- means (30) for securing said casing (28) to said outer support structure (4), means (24') suitable to be interposed between said casing (28) and said tubular shaft (2) and configured for allowing said casing (28) to support said tubular shaft (2) so that said tubular shaft (2) rotates around the its axis while said casing (28) remains fixed.

2. Device according to claim 1, **characterized in that** it comprises at least one conductor cable for connecting and transmitting audio signals, said at least one cable being connected to said amplifier (51), which is housed inside the casing (28), and exits from said casing (28) to be connected with said at least one acoustic diffuser (50) which is intended to be positioned outside the tubular shaft (2).

3. Device according to one or more of the preceding claims, **characterized in that**:
- said control and command unit (35) can be connected via wireless and/or wire with a plurality of lighting elements (18) applied to at least one component (2,4,6,8,10) of said roll-up cover installation (1),
- said at least one power supply (34) is also configured to provide electricity to said lighting elements (18),
- said receiver or transceiver (36) is connected and/or incorporated in said control and command unit (35) to receive control signals from the outside to control, based on these, said lighting elements (18).

4. Device according to one or more of the preceding claims, **characterized in that** it comprises:
- a head (30) which is applied to the outer side of the casing (28) to fix it to the external support structure (4), and/or
- at least one adapter (24') which is interposed between said casing (28) and the tubular shaft (2) and which is configured to rotate with said tubular shaft (2) and to allow the casing (28) to support in an idle way the tubular shaft (2).

5. Device according to one or more of the preceding claims, **characterized in that** said power supply (34) housed in the casing (28) is fed from the outside through a cable (38) which comes out from said casing (28) to be connected to a external electrical source.

6. Device according to one or more of the preceding claims, **characterized in that** it comprises at least one rechargeable battery (42) for supplying the device itself, said battery being connected to said power supply (34), which is housed inside said casing (28) and is accessible from the outside by means of doors (46, 48) formed in the casing (28) and in the tubular shaft (2) respectively.

7. Device according to one or more of the preceding claims, **characterized in that** said receiver (36) is configured to receive via cable the audio signals to be amplified, preferably by means of a USB interface or other interfaces suitable for transmitting audio signals.

8. Device according to one or more of the preceding claims, **characterized in that** inside the casing (28) a receiver or transceiver (36) is housed which is of the wireless type and is arranged to communicate wirelessly with an external terminal, in particular with a portable device, to receive the audio signals to be amplified sent by said external terminal.

9. Device according to one or more of the preceding claims, **characterized in that** inside the casing (28) it is housed a receiver or transceiver (36) which is of the wireless type and is configured to receive audio signals transmitted by radio stations.

10. Device according to one or more of the preceding claims, **characterized in that** inside the casing (28) is housed at least one receiver or a transceiver which is of the wireless type and is arranged to communicate wirelessly with an external terminal, in particular with a portable apparatus, for receiving control signals, sent from said external terminal, to control the switching on and off and adjustment of the lighting elements (18) and/or the sound reproduction to be carried out by means of the acoustic diffuser (50).

11. Installation of a roll-up cover (1) **characterized in that** it comprises a device (26) according to one or more of the preceding claims, and also **characterized in that** said device (26) is inserted and housed inside a tubular shaft (2) of said installation at one end of said shaft which is opposite to the end where means for moving said shaft (2) are housed.

12. Installation according to the previous claim, **characterized in that** it comprises an acoustic diffuser (50) which is positioned outside said tubular shaft (2) and which is electrically connected to said at least one amplifier (51) by at least one conductor cable connecting and transmitting audio signals coming out of the casing (28) of said device (26).

13. Installation according to the previous claim, **characterized in that** it comprises lighting elements (18) which are mounted on at least one component of said installation (1) and which are electrically connected to said control unit (35) of said device (26).

14. Installation of a roll-up cover (1) according to one or more of the claims 11 - 13, **characterized in that** it comprises:
- a support structure (4) for the constraint of said cover installation (1) to a fixed external structure,
- a tubular shaft (2) supported by said structure (4),
- a motorization unit (20) to cause the rotation of said tubular shaft (2), said motorization unit (20) is inserted and housed inside the tubular shaft (2) of said installation at one end of said shaft (2),
- a cover (6) to be wrapped on said tubular shaft (2) and to be carried by this,
- a supporting structure (8, 10) of said sheet (6),
and **in that** the casing (28) of said device (26) is housed inside said tubular shaft (2), between the latter and the support structure (4), and is provided with means (24', 30) which are configured to allow the casing (28) to idly support said tubular shaft (2).

## Patentansprüche

1. An eine aufrollbare Abdeckungsinstallation (1) zu befestigende Vorrichtung (26), wobei die aufrollbare Abdeckungsinstallation (1) von dem Typ ist, der Folgendes umfasst:
- eine Tragstruktur (4) für die Festspannung der Abdeckungsinstallation (1) auf eine feste äußere Struktur,
- eine rohrförmige Welle (2), die von der Struktur (4) getragen wird,
- Mittel, die so konfiguriert sind, dass sie die Drehung der rohrförmigen Welle (2) bewirken,
- eine Bahn (6), die auf die rohrförmige Welle (2) aufzuwickeln und von dieser abzuwickeln ist,
**dadurch gekennzeichnet, dass** die Vorrichtung (26) ein Gehäuse (28) umfasst, das so konfiguriert ist, dass es an einem entgegengesetzten Ende im Vergleich zu dem, in dem die Mittel untergebracht sind, die zum Bewirken der Drehung der rohrförmigen Welle (2) konfiguriert sind, entfernbar in die rohrförmige Welle (2) eingesetzt und darin untergebracht ist, wobei die Vorrichtung (26) ferner die folgenden Komponenten umfasst, die innerhalb des Gehäuses (28) angeordnet und aufgenommen sind:
- mindestens einen Verstärker (51), der dazu bestimmt ist, mit mindestens einem akustischen Diffusor (50) verbunden zu werden und dazu konfiguriert ist, die am Eingang empfangenen Audiosignale zu verstärken und die so verstärkten Audiosignale an den mindestens einen akustischen Diffusor (50) auszugeben,
- mindestens einen Empfänger oder Transceiver (36), der mit dem Verstärker (51) verbunden ist und der dazu konfiguriert ist, die zu verstärkenden Audiosignale mittels des mindestens einen Verstärkers (51) von außen zu empfangen.
- eine Einheit zur Steuerung und Befehl (35) der Wiedergabe der von dem Empfänger oder Transceiver (36) empfangenen Audiosignale, wobei der Verstärker (51) und der Empfänger/Transceiver (36) mit der Steuer- und Befehlseinheit (35) verbunden und/oder in diese integriert sind,
- mindestens eine Stromversorgung (34) zur Versorgung der Steuer- und Befehlseinheit (35), des Empfängers/Transceivers (36) und des Verstärkers (51) mit elektrischer Energie,
wobei die Vorrichtung (26) ferner Folgendes umfasst:
- Mittel (30) zum Befestigen des Gehäuses (28) an der äußeren Tragstruktur (4), Mittel (24'), die geeignet sind, zwischen dem Gehäuse (28) und der rohrförmigen Welle (2) angeordnet zu werden und so konfiguriert sind, dass das Gehäuse (28) die rohrförmige Welle (2) so tragen kann, dass sich die rohrförmige Welle (2) um ihre Achse dreht, während das Gehäuse (28) feststehend bleibt.

2. Vorrichtung nach Anspruch 1, **dadurch gekennzeichnet, dass** sie mindestens ein Leiterkabel zum Verbinden und Übertragen von Audiosignalen umfasst, wobei das mindestens eine Kabel mit dem Verstärker (51) verbunden ist, der innerhalb des Gehäuses (28) untergebracht ist und aus dem Gehäuse (28) austritt, um mit dem mindestens einen akustischen Diffusor (50) verbunden zu werden, der dazu bestimmt ist, außerhalb der rohrförmigen Welle (2) positioniert zu werden.

3. Vorrichtung nach einem oder mehreren der vorhergehenden Ansprüche, **dadurch gekennzeichnet, dass**:
- die Steuer- und Befehlseinheit (35) über Funk und/oder Draht mit einer Vielzahl von Beleuchtungselementen (18) verbunden werden kann, die an mindestens einer Komponente (2, 4, 6, 8, 10) der aufrollbaren Abdeckungsinstallation (1) angebracht sind,
- die mindestens eine Stromversorgung (34) auch dazu konfiguriert ist, die Beleuchtungselemente (18) mit Strom zu versorgen,
- der Empfänger oder Transceiver (36) mit der Steuer- und Befehlseinheit (35) verbunden und/oder in diese integriert ist, um Steuersignale von außen zu empfangen, um basierend auf diesen die Beleuchtungselemente (18) zu steuern.

4. Vorrichtung nach einem oder mehreren der vorhergehenden Ansprüche, **dadurch gekennzeichnet, dass** sie umfasst:
- einen Kopf (30), der an der Außenseite des Gehäuses (28) angebracht ist, um es an der äußeren Tragstruktur (4) zu befestigen, und/oder
- mindestens einen Adapter (24'), der zwischen dem Gehäuse (28) und der rohrförmigen Welle (2) angeordnet ist und der dazu konfiguriert ist, sich mit der rohrförmigen Welle (2) zu drehen und es dem Gehäuse (28) zu ermöglichen, die rohrförmige Welle (2) im Leerlauf zu tragen.

5. Vorrichtung nach einem oder mehreren der vorhergehenden Ansprüche, **dadurch gekennzeichnet, dass** die in dem Gehäuse (28) untergebrachte Stromversorgung (34) von außen durch ein Kabel (38) gespeist wird, das aus dem Gehäuse (28) austritt, um mit einer externen Stromquelle verbunden zu werden.

6. Vorrichtung nach einem oder mehreren der vorhergehenden Ansprüche, **dadurch gekennzeichnet, dass** sie mindestens eine wiederaufladbare Batterie (42) zur Versorgung der Vorrichtung selbst umfasst, wobei die Batterie mit der Stromversorgung (34) verbunden ist, die in dem Gehäuse (28) untergebracht ist und von außen durch Türen (46, 48) zugänglich ist, die in dem Gehäuse (28) und in der rohrförmigen Welle (2) ausgebildet sind.

7. Vorrichtung nach einem oder mehreren der vorhergehenden Ansprüche, **dadurch gekennzeichnet, dass** der Empfänger (36) konfiguriert ist, um die zu verstärkenden Audiosignale über Kabel zu empfangen, vorzugsweise mittels einer USB-Schnittstelle oder anderer Schnittstellen, die zum Übertragen von Audiosignalen geeignet sind.

8. Vorrichtung nach einem oder mehreren der vorhergehenden Ansprüche, **dadurch gekennzeichnet, dass** innerhalb des Gehäuses (28) ein Empfänger oder Transceiver (36) untergebracht ist, der vom drahtlosen Typ ist und angeordnet ist, um drahtlos mit einem externen Endgerät, insbesondere mit einer tragbaren Vorrichtung, zu kommunizieren, um die von dem externen Endgerät gesendeten zu verstärkenden Audiosignale zu empfangen.

9. Vorrichtung nach einem oder mehreren der vorhergehenden Ansprüche, **dadurch gekennzeichnet, dass** innerhalb des Gehäuses (28) ein Empfänger oder Transceiver (36) untergebracht ist, der vom drahtlosen Typ ist und konfiguriert ist, um Audiosignale zu empfangen, die von Funkstationen gesendet werden.

10. Vorrichtung nach einem oder mehreren der vorhergehenden Ansprüche, **dadurch gekennzeichnet, dass** in dem Gehäuse (28) mindestens ein Empfänger oder ein Transceiver untergebracht ist, der vom drahtlosen Typ ist und angeordnet ist, um drahtlos mit einem externen Endgerät, insbesondere mit einer tragbaren Vorrichtung, zu kommunizieren, um Steuersignale zu empfangen, die von dem externen Endgerät gesendet werden, um das Ein- und Ausschalten und die Einstellung der Beleuchtungselemente (18) und/oder die Schallwiedergabe, die mittels des akustischen Diffusors (50) durchgeführt werden soll, zu steuern.

11. Installation einer aufrollbaren Abdeckung (1), **dadurch gekennzeichnet, dass** sie eine Vorrichtung (26) nach einem oder mehreren der vorhergehenden Ansprüche umfasst, und auch **dadurch gekennzeichnet, dass** die Vorrichtung (26) in eine rohrförmige Welle (2) der Installation an einem Ende der Welle eingesetzt und darin untergebracht ist, das dem Ende gegenüberliegt, an dem Mittel zum Bewegen der Welle (2) untergebracht sind.

12. Installation nach dem vorhergehenden Anspruch, **dadurch gekennzeichnet, dass** sie einen akustischen Diffusor (50) umfasst, der außerhalb der rohrförmigen Welle (2) positioniert ist und der mit dem mindestens einen Verstärker (51) durch mindestens ein Leiterkabel elektrisch verbunden ist, das Audiosignale verbindet und überträgt, die aus dem Gehäuse (28) der Vorrichtung (26) austreten.

13. Installation nach dem vorhergehenden Anspruch, **dadurch gekennzeichnet, dass** sie Beleuchtungselemente (18) umfasst, die an mindestens einer Komponente der Installation (1) befestigt sind und die elektrisch mit der Steuereinheit (35) der Vorrichtung (26) verbunden sind.

14. Installation einer aufrollbaren Abdeckung (1) nach einem oder mehreren der Ansprüche 11 - 13, **dadurch gekennzeichnet, dass** sie umfasst:
- eine Tragstruktur (4) für die Festspannung der Abdeckungsinstallation (1) auf eine feste äußere Struktur,
- eine rohrförmige Welle (2), die von der Struktur (4) getragen wird,
- eine Motorisierungseinheit (20), um die Drehung der rohrförmigen Welle (2) zu bewirken, wobei die Motorisierungseinheit (20) in die rohrförmige Welle (2) der Installation an einem Ende der Welle (2) eingesetzt und darin untergebracht ist,
- eine Abdeckung (6), die auf die rohrförmige Welle (2) aufzuwickeln und von diesem zu tragen ist,
- eine Tragstruktur (8, 10) der Bahn (6),
und dadurch, dass das Gehäuse (28) der Vorrichtung (26) innerhalb der rohrförmigen Welle (2) zwischen dieser letzteren und der Tragstruktur (4) untergebracht ist und mit Mitteln (24', 30) versehen ist, die so konfiguriert sind, dass sie dem Gehäuse (28) ermöglichen, die rohrförmige Welle (2) im Leerlauf zu tragen.

## Revendications

1. Dispositif (26) destiné à être monté sur une installation de couverture enroulable (1), ladite installation de couverture enroulable (1) étant du type comprenant :
- une structure de support (4) pour la contrainte de ladite installation de couverture (1) à une structure externe fixe,
- un arbre tubulaire (2) supporté par ladite structure (4),
- des moyens configurés pour provoquer la rotation dudit arbre tubulaire (2),
- une feuille (6) à enrouler sur ledit arbre tubulaire (2) et à dérouler à partir de celui-ci,
**caractérisé en ce que** le dispositif (26) comprend un boîtier (28) qui est configuré pour être inséré et logé de manière amovible dans ledit arbre tubulaire (2) à une extrémité opposée à celle dans laquelle sont logés lesdits moyens configurés pour provoquer la rotation dudit arbre tubulaire (2), le dispositif (26) comprenant en outre les composants suivants qui sont disposés et logés à l'intérieur dudit boîtier (28) :
- au moins un amplificateur (51) destiné à être connecté à au moins un diffuseur acoustique (50) et configuré pour amplifier les signaux audio reçus à l'entrée et pour émettre les signaux audio ainsi amplifiés vers ledit au moins un diffuseur acoustique (50),
- au moins un récepteur ou émetteur-récepteur (36) qui est connecté audit amplificateur (51) et qui est configuré pour recevoir de l'extérieur les signaux audio à amplifier au moyen dudit au moins un amplificateur (51),
- une unité de contrôle et de commande (35) de la reproduction des signaux audio reçus par ledit récepteur ou émetteur-récepteur (36), ledit amplificateur (51) et ledit récepteur/émetteur-récepteur (36) étant connectés et/ou incorporés dans ladite unité de contrôle et de commande (35),
- au moins une alimentation électrique (34) pour fournir de l'énergie électrique à ladite unité de contrôle et de commande (35), audit récepteur/émetteur-récepteur (36) et audit amplificateur (51)
ledit dispositif (26) comprenant en outre :
- des moyens (30) de fixation dudit boîtier (28) à ladite structure de support extérieure (4), des moyens (24') aptes à être interposés entre ledit boîtier (28) et ledit arbre tubulaire (2) et configurés pour permettre audit boîtier (28) de supporter ledit arbre tubulaire (2) de sorte que ledit arbre tubulaire (2) tourne autour de son axe tandis que ledit boîtier (28) reste fixe.

2. Dispositif selon la revendication 1, **caractérisé en ce qu'**il comprend au moins un câble conducteur pour la connexion et la transmission des signaux audio, ledit au moins un câble étant connecté audit amplificateur (51), qui est logé à l'intérieur du boîtier (28), et sort dudit boîtier (28) pour être connecté audit au moins un diffuseur acoustique (50) qui est destiné à être positionné à l'extérieur de l'arbre tubulaire (2).

3. Dispositif selon une ou plusieurs des revendications précédentes, **caractérisé en ce que** :
- ladite unité de contrôle et de commande (35) peut être connectée par voie hertzienne et/ou filaire à une pluralité d'éléments d'éclairage (18) appliqués à au moins un composant (2, 4, 6, 8, 10) de ladite installation de couverture enroulable (1),
- ladite au moins une alimentation électrique (34) est également configurée pour fournir de l'électricité auxdits éléments d'éclairage (18),
- ledit récepteur ou émetteur-récepteur (36) est connecté et/ou incorporé dans ladite unité de contrôle et de commande (35) pour recevoir des signaux de commande de l'extérieur afin de commander, en fonction de ceux-ci, lesdits éléments d'éclairage (18).

4. Dispositif selon une ou plusieurs des revendications précédentes, **caractérisé en ce qu'**il comprend :
- une tête (30) appliquée sur le côté extérieur du boîtier (28) pour le fixer à la structure de support externe (4), et/ou
- au moins un adaptateur (24') qui est interposé entre ledit boîtier (28) et l'arbre tubulaire (2) et qui est configuré pour tourner avec ledit arbre tubulaire (2) et pour permettre au boîtier (28) de supporter l'arbre tubulaire (2) d'une manière inactive.

5. Dispositif selon une ou plusieurs des revendications précédentes, **caractérisé en ce que** ladite alimentation électrique (34) logée dans le boîtier (28) est alimentée de l'extérieur par un câble (38) qui sort dudit boîtier (28) pour être connecté à une source électrique externe.

6. Dispositif selon une ou plusieurs des revendications précédentes, **caractérisé en ce qu'**il comprend au moins une batterie rechargeable (42) pour l'alimentation du dispositif lui-même, ladite batterie étant reliée à ladite alimentation électrique (34), qui est logée à l'intérieur dudit boîtier (28) et est accessible de l'extérieur au moyen de portes (46, 48) ménagées respectivement dans le boîtier (28) et dans l'arbre tubulaire (2).

7. Dispositif selon une ou plusieurs des revendications précédentes, **caractérisé en ce que** ledit récepteur (36) est configuré pour recevoir par câble les signaux audio à amplifier, de préférence au moyen d'une interface USB ou d'autres interfaces adaptées à la transmission de signaux audio.

8. Dispositif selon une ou plusieurs des revendications précédentes, **caractérisé en ce qu'**à l'intérieur du boîtier (28) est logé un récepteur ou émetteur-récepteur (36) qui est du type sans fil et qui est agencé pour communiquer sans fil avec un terminal externe, en particulier avec un appareil portable, pour recevoir les signaux audio à amplifier envoyés par ledit terminal externe.

9. Dispositif selon une ou plusieurs des revendications précédentes, **caractérisé en ce qu'**à l'intérieur du boîtier (28) est logé un récepteur ou émetteur-récepteur (36) qui est de type sans fil et qui est configuré pour recevoir des signaux audio transmis par des stations radio.

10. Dispositif selon une ou plusieurs des revendications précédentes, **caractérisé en ce qu'**à l'intérieur du boîtier (28) est logé au moins un récepteur ou un émetteur-récepteur qui est du type sans fil et qui est agencé pour communiquer sans fil avec un terminal externe, en particulier avec un appareil portable, pour recevoir des signaux de commande, envoyés depuis ledit terminal externe, pour commander l'allumage, l'extinction et le réglage des éléments d'éclairage (18) et/ou la reproduction sonore à effectuer au moyen du diffuseur acoustique (50).

11. Installation d'une couverture enroulable (1) **caractérisée en ce qu'**elle comprend un dispositif (26) selon une ou plusieurs des revendications précédentes, et également **caractérisée en ce que** ledit dispositif (26) est inséré et logé à l'intérieur d'un arbre tubulaire (2) de ladite installation à une extrémité dudit arbre qui est opposée à l'extrémité où sont logés les moyens de déplacement dudit arbre (2).

12. Installation selon la revendication précédente, **caractérisée en ce qu'**elle comprend un diffuseur acoustique (50) qui est positionné à l'extérieur dudit arbre tubulaire (2) et qui est relié électriquement audit au moins un amplificateur (51) par au moins un câble conducteur connectant et transmettant des signaux audio sortant du boîtier (28) dudit dispositif (26).

13. Installation selon la revendication précédente, **caractérisée en ce qu'**elle comprend des éléments d'éclairage (18) qui sont montés sur au moins un composant de ladite installation (1) et qui sont connectés électriquement à ladite unité de commande (35) dudit dispositif (26).

14. Installation d'une couverture enroulable (1) selon une ou plusieurs des revendications 11-13, **caractérisée en ce qu'**elle comprend :
- une structure de support (4) pour la contrainte de ladite installation de couverture (1) à une structure externe fixe,
- un arbre tubulaire (2) supporté par ladite structure (4),
- une unité de motorisation (20) pour provoquer la rotation dudit arbre tubulaire (2), ladite unité de motorisation (20) est insérée et logée à l'intérieur de l'arbre tubulaire (2) de ladite installation à une extrémité dudit arbre (2),
- une couverture (6) destinée à être enveloppée sur ledit arbre tubulaire (2) et à être portée par celui-ci,
- une structure de support (8, 10) de ladite feuille (6),
et **en ce que** le boîtier (28) dudit dispositif (26) est logé à l'intérieur dudit arbre tubulaire (2), entre ce dernier et la structure de support (4), et est pourvu de moyens (24', 30) qui sont configurés pour permettre au boîtier (28) de supporter ledit arbre tubulaire (2) de manière inactive.
